# EUROPEAN PATENT APPLICATION

(11) **EP 1 087 156 A2**
(43) Date of publication of application: **28.03.2001**
(21) Application number: 00203220.9
(22) Date of filing: 15.09.2000
(51) Int. Cl.: F16H 61/00

(54) **Variable-speed drive with device for adjusting the axial thrust exerted on the driven movable half-pulley in relation to the torque transmitted**

(30) Priority: 22.09.1999 IT MI991958
(71) Applicant: ADLER S.p.A., Rovereto (Trento) (IT)
(72) Inventor: Morone, Alfio, Milano (IT)
(74) Representative: Raimondi, Alfredo, Dott. Ing. Prof.

(57) **Abstract**

Variable-speed drive comprising: a pulley (100) which is mounted on the driving shaft (1) and is formed by a fixed half-pulley (101) and an axially movable half-pulley (102); and a pulley (200) which is mounted on the driven shaft (2) and is formed by a fixed half-pulley (201), a half-pulley (202) movable axially against the thrusting action of an axial spring (206) and a set of front teeth (207) integral with the hub of said movable half-pulley (202) and designed to engage with corresponding axial projections (208) integral with an element (206a;203b) connected rotatably to the fixed half-pulley (202), wherein said projections (208) have a convex surface (208a), with a variable inclination, designed to engage frontally with said teeth (207) of the movable half-pulley and cause a variation in the force generated, according to the different point of contact with the tooth (207) of the driven movable half-pulley.

## Description

The present invention relates to a variable-speed drive comprising a driving pulley and a driven pulley and provided with means able to produce a variation in the axial thrust exerted on the axially movable driven pulley part, in relation to the variation in torque to be transmitted.

It is known, in the technical sector relating to the construction of vehicles such as mopeds and the like, vehicles for golf courses, caddie cars and the like, that it is required to arrange a speed gear between the driving shaft and the driven shaft for transmitting the movement to the driving wheel which, in the case of mopeds and the like, is the rear wheel.

It is also known that a type of gear used for said transmission is a gear having a variable speed between a low transmission ratio and a high transmission ratio.

Said variable-speed drives essentially consist of two parts which are respectively integral with the (front) driving shaft and the (rear) driven shaft and each of which comprises a pulley formed by a fixed half-pulley and an axially movable half-pulley, the two pulleys being connected together by means of a drive belt.

The displacement, in the axial direction, of the front movable half-pulley is determined by the axial component of the thrust produced, as a result of centrifugal force, by inertial masses movable radially inside suitable guide channels inside the front pulley and designed so that, with an increase in the speed of rotation of the motor and hence the pulley, said masses tend to move axially the movable half-pulley towards the fixed half-pulley, causing narrowing of the race and rising of the belt inside the said race with a consequent gradual variation in the transmission ratio.

A displacement of the driving half-pulley in the axial direction results in a displacement of the driven half-pulley in the axial direction, with widening of the race containing the belt occurring against the thrusting action of opposition means such as springs the like which ensure compression, in the axial direction, of the pulley against the belt, in order to prevent relative slipping between them, tensioning of the drive belt and the return of the latter into the low ratio position.

Said spring is of the compression type and exerts a smaller force when the driven movable half-pulley is axially moved towards the fixed half-pulley, namely when the belt is in a radially outermost position and the ratio is low, i.e. in the condition where the maximum torque is transmitted.

The size of the spring must therefore be predetermined on the basis of the maximum value of the torque to be transmitted; since, however, this maximum torque is not constantly applied, the high tension of the spring exerts a thrusting action on the belt which is greater than that actually required, thus causing more rapid wear of the said belt.

In addition, the spring produces a maximum thrusting force in high ratio transmission conditions (minimum torque acting on the driven pulley), instead of the opposite as would be desirable, further worsening the transmission efficiency.

In order to overcome these drawbacks, so-called torque servo systems, or devices designed to produce an increase in the axial thrust on the driven movable half-pulley, and therefore the belt, in relation to the torque actually transmitted, have been introduced.

An example of said torque servo devices consists of a set of front teeth formed on the bush of the movable half-pulley and engaging with corresponding projections on the plate of a clutch coupled to the variable-speed device or, in the absence of a clutch, with corresponding teeth integral with the driven shaft of the variable-speed device.

Although performing their function, these known servo systems nevertheless have certain drawbacks arising from the fact that they are unable to effect any variation in adjustment of the thrust exerted on the movable half-pulley, according to the torque transmitted, which varies considerably with the continuous variation in the transmission ratio, during operation of the variable-speed device.

The technical problem which is therefore posed is that of providing a variable-speed drive comprising means for varying the adjustment of the compression thrust in an axial direction exerted on the driven movable half-pulley, upon variation in the torque transmitted and following variation in the transmission ratio.

Within the context of this problem a further requirement is that said means should be easy and inexpensive to manufacture and assemble and be able to reduce the wear of the parts forming the device and also improve the transmission efficiency.

These technical problems are solved according to the present invention by a variable-speed drive comprising: a pulley which is mounted on the driving shaft and is formed by a fixed half-pulley and an axially movable half-pulley; and a pulley which is mounted on the driven shaft and is formed by a fixed half-pulley, a half-pulley movable axially against the thrusting action of an axial spring and a set of front teeth integral with the hub of said driven movable half-pulley and designed to engage with corresponding axial projections integral with an element connected rotatably to the fixed driven half-pulley, wherein said projections have a convex surface, with a variable inclination, designed to engage frontally with said teeth of the movable half-pulley and cause a variation in the force generated, according to the different point of contact with the tooth of the driven movable half-pulley.

Further details may be obtained from the following description of a non-limiting example of embodiment of the invention provided with reference to the accompanying drawings in which:
- Figure 1 shows a cross-sectional view of the variable-speed drive according to Fig. 1 in the low ratio condition;
- Figure 2 shows a partial cross-section along the plane indicated by II-II in Fig. 1;
- Figure 3 shows a cross-sectional view of the variable-speed drive with device for adjusting the axial thrust according to the present invention, in the high ratio condition;
- Figure 4 shows a partial cross-section along the plane indicated by IV-IV in Fig. 3, showing a detail of the device for adjusting the axial thrust.

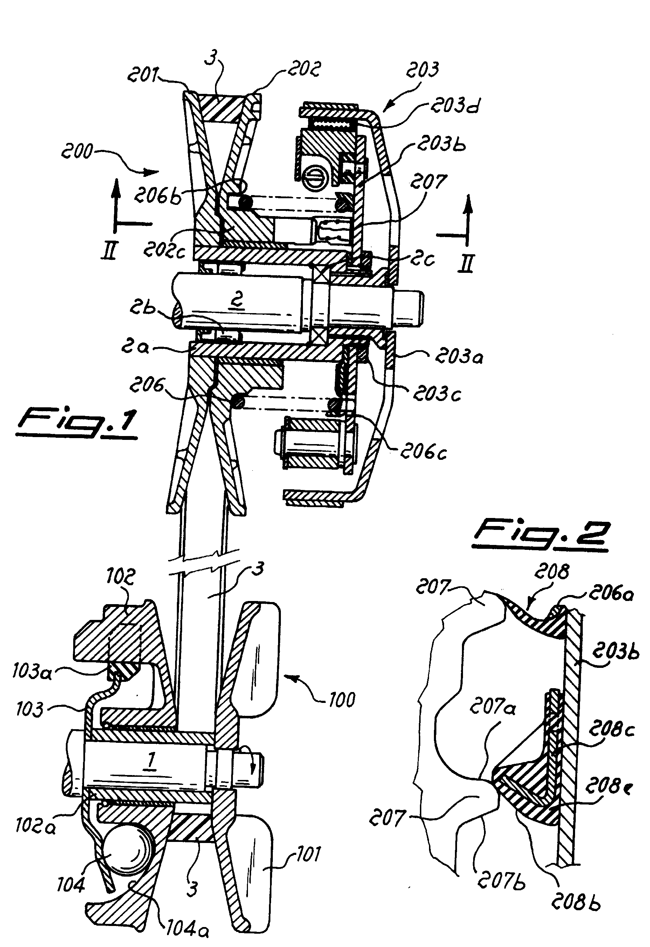

As illustrated in Fig. 1, the variable-speed drive is composed of a part 100 integral with, the driving shaft 1 (referred to below as "front part") and a part 200 integral with the driven shaft 2 (referred to below as "rear part"), which are connected together by a drive belt 3.

The front part 100 comprises a pulley formed by a fixed half-pulley 101 and a movable half-pulley 102 mounted on a spacer 102a in turn mounted on the drive shaft 1, with respect to which spacer the half-pulley 102 can be displaced in the axial direction.

Rolling members 104 are arranged between the movable half-pulley surface 102 opposite the belt 3 and an opposition element 103 which is fixed to the shaft 1 and constrained with the movable half-pulley 102 by means of blocks 103a, said rolling members forming masses which are displaced in a radial direction away from/towards the axis of rotation of the shaft 1 as a result of the greater/smaller centrifugal force produced by the greater/smaller speed of rotation of the drive pulley.

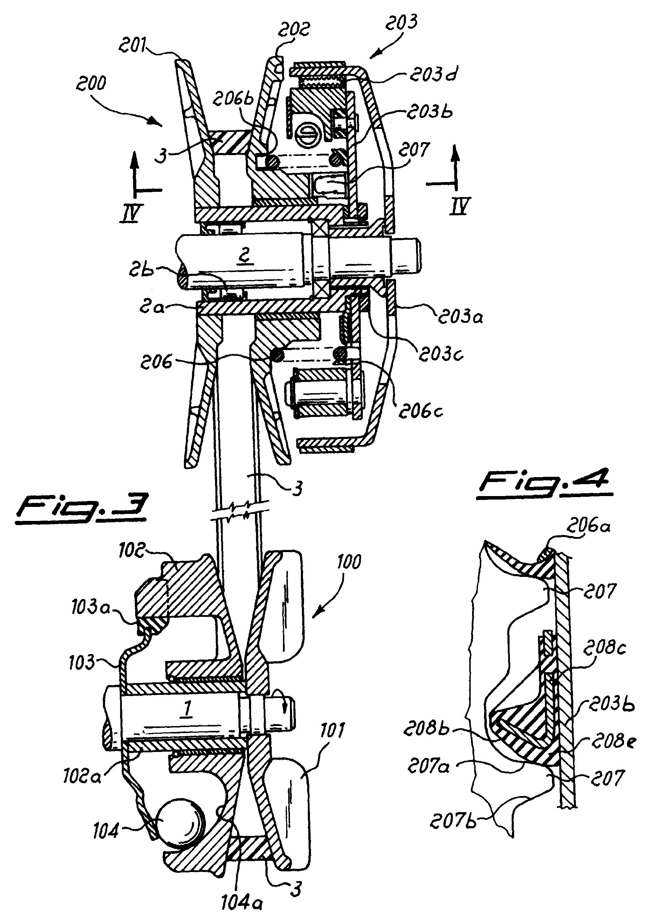

Reacting against the opposition element 103, said rolling members act against a suitably shaped guide surface 104a of the half-pulley 102; as a result the radial displacement of the rolling members, due to the centrifugal force, produces a corresponding axial displacement of the movable half-pulley 102 towards the fixed half-pulley 101 (Fig. 1), which causes a displacement of the belt 3 to the outside of the pulley 100, corresponding to a high-speed operating condition (Fig. 3).

The driven part of the variable-speed drive comprises a pulley 200 formed by a fixed half-pulley 201 integral with a bush 2a mounted on bearings 2b, 2c keyed onto the driven shaft 2 and a half-pulley 202 movable axially on said bush 2a with respect to the fixed half-pulley 201. In this way the pulley 200 rotates together with the sleeve which is idle with respect to the driven shaft 2.

The front end of the driven shaft 2 also has, mounted on it, the bell member 203a of a clutch 203 which comprises a plate 203b axially connected to the said sleeve 2a by means of fixing elements 203c; the plate 203b is also radially coupled to the bell member 203a by means of friction surfaces 203d.

The internal surface of the plate 203b of the clutch 203, which is integral with the fixed bush, has mounted on it a cup member 206a for containing one end of a spring 206 coaxial with the shaft 2, the other end being inserted in a corresponding seat 206b of the movable half-pulley 202.

The hub part 202c of the movable half-pulley 202 also has front teeth 207 with a front profile 207a (in the direction of rotation) suitably shaped in the manner of a curved surface (Fig. 2).

Said teeth 207 are designed to engage frontally with corresponding projections 208 which, in the example shown in the figures, are integral with the cup member 206a fixed to the plate 203b of the clutch 203 and which have a convex surface 208a with a variable radius of curvature.

The profiles 207a,208a of the teeth 207 and the projections 208, respectively, are preferably of the correlated type so as to ensure contact over the whole width of the tooth in any relative axial position of the teeth and the projections.

It must also be pointed out how the above-described choice of variable profile formed on the projection 208 may be regarded as being purely exemplary, the functional equivalence of forming, if necessary, the variable-profile surface on the tooth 207 being obvious to a person skilled in the art.

The spring 206 is inserted into its seat with a flexural prestressed force which provides the variable-speed device with a torsional component able to ensure that the contact is maintained between the front surface of the tooth 207 and the projection 208 both in the thrusting condition and in the relaxed state.

Said prestressed force is obtained by arranging the opposite ends of the spring in special seats 206b in the movable half-pulley 202 and 206c in the cup member 203, which are angularly staggered with respect to each other.

It is also envisaged being able to provide means for adjusting the said prestressed force, for example consisting of two series of seats 206b and 206c, one of which has an additional seat compared to the other series so as to allow the possibility of greater and more precise adjustment, while ensuring a reduced number of the holes on the respective parts 202 and 203.

As shown in detail in Fig. 4, the projection 208 is formed by a core consisting of a plate 208b lined with plastic, wear-resistant and low-friction material 208e, this allowing the wear of the profile to be distributed over the whole surface area making contact with the tooth 207 which is made of metallic material.

This lining may be advantageously obtained by means of co-moulding during manufacture of the part provided with the projections, with an obvious reduction in the production costs.

It is also envisaged that this projection-carrying part may coincide with the cup member, as shown, or may be a separate part or may consist of the clutch plate itself.

In this connection it must be pointed out, however, that the clutch could also not be provided, as occurs, for example, in motor-sleds.

The operating principle of the variable-speed device is as follows:
in conditions where there is a high torque and low speed of the driven half-pulley (Figs. 1,2), as is required for example in order to move the vehicle from standstill,
   - the speed of the drive pulley 100 is low; consequently the rolling members 104 do not exert an axial thrust sufficient to displace axially the movable half-pulley 102 towards the fixed half-pulley 101 and the race of the pulley 100 remains in a wide position;
   - the spring 206 exerts a minimum load on the movable half-pulley 202 which is pushed against the fixed half-pulley 201, causing the belt 3 to be arranged in a radially outermost position;
   - being unextendable, the belt moves in a radial direction, drawing its part wound around the pulley 100 towards the axis of rotation and causing the axial movement of the half-pulley 102 away from the fixed half-pulley 101;
in these conditions the tooth 207 is in an axial position with respect to the seat formed by the projection 208, such as to engage with the latter along a section of its surface having a smaller inclination with respect to the axis of rotation, resulting in the generation of a high axial thrust which, being added to that of the spring, produces a high overall axial force on the half-pulley in relation to the high torque to the transmitted, resulting from the low transmission ratio of the variable-speed device.

When there is an increase in the speed (Figs. 3,4):
- the rolling members 104 of the front pulley start to act, being displaced radially outwards and causing the axial displacement of the movable, half-pulley 102 towards the fixed half-pulley 101, causing narrowing of the race in the drive pulley 100;
- consequently the belt 3 tends to move away radially outwards on the drive pulley 100, drawing the part wound on the driven pulley 200 towards the axis of rotation;
- the half-pulley 202 thereof is forced by the penetration of the belt 3 to move away axially from the fixed half-pulley 201 against the thrusting action of the spring 206;
- the axial displacement of the half-pulley 202 causes the axial displacement of the teeth 207 on the projections 208, causing relative frontal contact along the profile section 208a having a greater inclination with respect to the axis of rotation and consequent generation of a small force which, being added to the thrust of the spring, produces a small overall axial force, in relation to the small torque to be transmitted resulting from the increased transmission ratio of the variable-speed device.

With the variable-speed drive according to the present invention it is therefore possible to vary the axial force which acts on the driven movable half-pulley so that, when there is a variation in the transmission ratio from low values with a high torque to high values with a low torque, a corresponding sufficient overall thrust is produced on the movable half-pulley, said thrust thus being high with a high torque and small with a low torque.

In any case this overall axial thrust is the minimum required and sufficient for transmission of the torque, so as to reduce the wear of the belt and optimize the transmission efficiency.

A further advantage of the variable-speed drive according to the invention consists in the possibility of being able to adapt the said drive to motors with widely varying power outputs by means of simple replacement of the cup member 206a or the plate 203b on which the cup member 206 is mounted, instead of having to replace the entire driven pulley.

In addition, owing to the particular form of the component parts, it is possible to manufacture the main components of the variable-speed device by means of aluminium casting and plastic moulding, resulting in reduced costs.

## Claims

1. Variable-speed drive comprising:
- a drive pulley (100) which is mounted on the driving shaft (1) and is formed by:
- a fixed half-pulley (101),
- an axially movable half-pulley (102)
- a driven pulley (200) which is mounted on the driven shaft (2) and is formed by:
- a fixed half-pulley (201),
- a half-pulley (202) movable axially against the thrusting action of an axial spring (206),
- a set of front teeth (207) integral with the hub of said driven movable half-pulley (202) and designed to engage with corresponding:
- axial projections (208) integral with an element (206a;203b) connected rotatably to the fixed driven half-pulley (202);
- a drive belt (3) endlessly wound around the two pulleys:
characterized in that:
said projections (208)/front teeth (207) have a convex surface (208a), with a variable inclination with respect to the axis of rotation, designed to engage frontally with said teeth (207)/projections (208) and cause a variation in the axial force generated, according to the different point of relative contact between the teeth/projections and the projections/teeth.

2. Variable-speed drive according to Claim 1, characterized in that said surfaces of the teeth/projections have correlated profiles.

3. Variable-speed drive according to Claim 1, characterized in that said projections (208) are lined with wear-resistant and low-friction material (208a).

4. Variable-speed drive according to Claim 1, characterized in that said teeth (207) are lined with wear-resistant and low-friction material.

5. Variable-speed device according to Claim 3 or 4, characterized in that said lining is obtained by means of co-moulding of the wear-resistant and low-friction material.

6. Variable-speed drive according to Claim 1, characterized in that said element on which the projections (208) are mounted is the plate (203b) of a clutch (203) arranged between the driven pulley (200) and the driven shaft (2).

7. Variable-speed drive according to Claim 1, characterized in that said plate (208) comprises a cup member (206a) for housing one end of the spring (206).

8. Variable-speed drive according to Claim 7, characterized in that said cup member (206a) is integral with the plate (208).

9. Variable-speed drive according to Claim 7, characterized in that said projections (208a) engaging with the front teeth of the driven movable half-pulley are formed on the cup member (206a).

10. Variable-speed drive according to Claim 1, characterized in that said axial spring (206) has a flexural prestressed force.

11. Variable-speed drive according to Claim 10, characterized in that means for adjusting the said prestressed force are provided.

12. Variable-speed drive according to Claim 11, characterized in that said means for adjusting the prestressed force consist of two series of seats (206b, 206c) which are respectively formed on the driven movable half-pulley and on the reaction element of the spring, one of said series having an additional hole compared to the other series.

13. Variable-speed drive according to Claim 1, characterized in that its component parts are made by means of aluminium die-casting.

14. Variable-speed drive according to Claim 1, characterized in that its component parts are made of plastic material.

15. Variable-speed drive according to Claim 1, characterized in that the friction plate/spring-carrying cup member are interchangeable depending on the torque to be transmitted.
